# EUROPEAN PATENT APPLICATION

(11) **EP 2 744 155 A1**
(43) Date of publication of application: **18.06.2014**
(21) Application number: 11860129.3
(22) Date of filing: 05.09.2011
(51) Int. Cl.: H04L 12/56

(54) **DATA COMMUNICATION METHOD IN OPTICAL NETWORK SYSTEM, AND OPTICAL NETWORK UNIT AND SYSTEM**

(71) Applicant: Huawei Technologies Co., Ltd., Shenzhen, Guangdong 518129 (CN)
(72) Inventor: CHENG, Biao, Shenzhen Guangdong 518129 (CN)
(74) Representative: Körber, Martin Hans
(86) International application number: PCT/CN2011/079344
(87) International publication number: WO 2012/119439

(57) **Abstract**

The present invention provides a data communication method in an optical network system, an optical network unit and an optical network system, where the method includes: receiving, through a first port of a first optical network unit, a first message sent by a first optical line terminal, where the first message is used to instruct the first optical network unit to switch to the second port from the first port; and after the first optical network unit switches to the second port from the first port according to the first message, performing data communication with a second optical line terminal through the second port. Since a data transmission speed between the first optical line terminal and the first optical network unit is higher than a data transmission speed between an OLT and an EMS, by using the data communication method, the data transmission speed is raised, it is ensured that switchover time between the OLTs is within 50 ms, and reliability of data communication is further improved.

## Description

### TECHNICAL FIELD

Embodiments of the present invention relate to the field of communications technologies, and in particular, to a data communication method in an optical network system, an optical network unit and an optical network system.

### BACKGROUND

A passive optical network (Passive Optical Network, PON for short) is a type of point-to-multipoint optical access technology. The PON includes an optical line terminal (Optical Line Terminal, OLT for short), an optical splitter, an optical network unit (Optical Network Unit, ONU) and optical fibers for connecting these devices. The OLT is connected to the optical splitter by using a trunk optical fiber, and the optical splitter is connected to each ONU by using multiple branch optical fibers.

In order to ensure that a service can be normally performed after the OLT fails, two OLTs may be used for mutual backup. In the prior art, a composition of an optical network system is as follows: a first OLT 1 and a second OLT 2 are respectively connected to an optical splitter by using independent trunk optical fibers, and the optical splitter is connected to at least one ONU by using branch optical fibers. Both the first OLT 1 and the second OLT 2 are connected to an element management system (Element Management System, EMS for short). Normally, the first OLT 1 communicates with each ONU, and when detecting that the first OLT 1 fails, the EMS 5 instructs the second OLT 2 to be a primary OLT, so that the second OLT 2 communicates with each ONU instead of the first OLT 1.

A problem in the data communication method in the prior art is as follows: When a link between the ONU and the first OLT fails, generally, the EMS designates to switch to the second OLT from the first OLT. Each OLT communicates with the EMS based on a Simple Network Management Protocol (Simple Network Management Protocol, SNMP), a data transmission speed is slow, the OLTs and the EMS are physically separated by great distances, and interactive data may need to cross multiple exchange devices. Therefore, after failure occurs, switchover time is long, and a normal switchover requirement of finishing within 50 ms cannot be met. Further, if any exchange device between the OLT and the EMS fails, communication between the OLT and the EMS cannot be performed, so that primary-secondary switchover of the link cannot be implemented, and reliability is poor.

### SUMMARY

Embodiments of the present invention provide a data communication method in an optical network system, an optical network unit, and an optical network system, which are used to solve the problem, in the prior art, of long switchover time and poor reliability during switchover between OLTs due to a low data transmission speed between an EMS and the OLTs, so as to ensure that the switchover time between the OLTs is within 50 ms, thereby improving reliability of data communication.

According to an aspect, the present invention provides a data communication method in an optical network system, where:
at least one first optical network unit in the optical network system is respectively connected to a first optical line terminal by using a first port, and is connected to a second optical line terminal by using a second port, and the data communication method includes:
   receiving, through the first port of the first optical network unit, a first message sent by the first optical line terminal, where the first message is used to instruct the first optical network unit to switch to the second port from the first port; and
   switching, by the first optical network unit, to the second port from the first port according to the first message, and performing data communication with the second optical line terminal through the second port.

According to another aspect, the present invention further provides an optical network unit, where:
the optical network unit is respectively connected to a first optical line terminal by using a first port, and is connected to a second optical line terminal by using a second port, and the optical network unit includes:
   a first receiving unit, configured to receive, through the first port of the optical network unit, a first message sent by the first optical line terminal, where the first message is used to instruct the optical network unit to switch to the second port from the first port; and
   a switchover processing unit, configured to switch the optical network unit to the second port from the first port according to the first message, and perform data communication with the second optical line terminal through the second port.

According to another aspect, the present invention further provides an optical network system, where:
at least one first optical network unit in the optical network system is respectively connected to a first optical line terminal by using a first port, and is connected to a second optical line terminal by using a second port, and the optical network system includes:
   the first optical line terminal, configured to send a first message to the first optical network unit, where the first message is used to instruct the optical network unit to switch to the second port from the first port;
   the first optical network unit, configured to receive, through the first port of the first optical network unit, the first message sent by the first optical line terminal; and switch to the second port from the first port according to the first message, and perform data communication with the second optical line terminal through the second port; and
   the second optical line terminal, configured to: after the first optical network unit switches to the second port from the first port, perform data communication with the first optical network unit through the second port of the first optical network unit.

In the present invention, the first message sent by the first optical line terminal is received through the first port of the first optical network unit, where the first message is used to instruct the first optical network unit to switch to the second port from the first port; and after the first optical network unit switches to the second port from the first port according to the first message, data communication is performed with the second optical line terminal through the second port. Since a data transmission speed between the first optical line terminal and the first optical network unit is higher than a data transmission speed between an OLT and an EMS, by using the data communication method, the data transmission speed is raised, it is ensured that switchover time between the OLTs is within 50 ms, and reliability of data communication is further improved.

### BRIEF DESCRIPTION OF DRAWING(S)

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a method flowchart of a data communication method in an optical network system according to an embodiment of the present invention;
FIG. 2 is a specific method flowchart of a data communication method in an optical network system according to an embodiment of the present invention;
FIG. 3 is a schematic structural diagram of an optical network unit according to an embodiment of the present invention; and
FIG. 4 is a schematic structural diagram of an optical network system according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

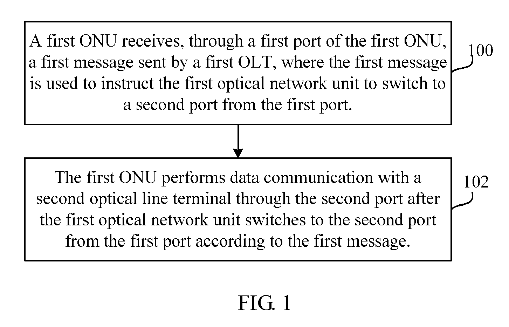

FIG. 1 is a method flowchart of a data communication method in an optical network system according to an embodiment of the present invention, including:

At least one first optical network unit in the optical network system is respectively connected to a first optical line terminal by using a first port, and is connected to a second optical line terminal by using a second port, and the data communication method includes:

Step 100: The first optical network unit (Optical Network Unit, ONU) receives, through the first port of the first ONU, a first message sent by the first optical line terminal (Optical Line Terminal, OLT), where the first message is used to instruct the first optical network unit to switch to the second port from the first port.

Before the receiving, through the first port of the first ONU, a first message sent by the first OLT, the method further includes:
receiving, by the first ONU through the first port of the first ONU, a second message sent by the first OLT, where the second message includes: a port number of a port where the first OLT is located and a media access control (Media Access Control, MAC) address of the port where the first OLT is located; and
sending, by the first ONU according to the second message, a third message to the second OLT through the second port of the first ONU, where the third message includes information included in the second message and a port number of the first port where the first optical network unit is located.

The communication method in the optical network further includes:
receiving, by the first ONU through the second port of the first ONU, a fourth message returned by the second OLT, where the fourth message includes: a port number of a port where the second OLT is located and a MAC address of the port where the second OLT is located; and sending, according to the fourth message, a fifth message to the first OLT through the first port of the first ONU, where the fifth message includes information included in the fourth message and a port number of the second port where the first ONU is located.

The second message further includes an IP address of a management interface where the first OLT is located; the third message further includes a MAC address of the first port where the first ONU is located, and/or an Internet Protocol (Internet Protocol, IP) address of a management interface where the first ONU is located; the fourth message further includes an IP address of a management interface where the second OLT is located; and the fifth message further includes a MAC address of the second port where the first ONU is located, and/or the IP address of the management interface where the first ONU is located.

Before the receiving, through the first port of the first ONU, a first message sent by the first OLT, the method further includes:
receiving, by the first ONU, a message, which is sent by the first OLT and carries protection group information, through a first interface of the first ONU, where the protection group information includes a relation between a primary link and a secondary link; and sending the message including the protection group information to the second OLT through a second interface of the first ONU; or
receiving, by the first ONU, a message, which is sent by the second OLT and carries protection group information, through a second interface of the first ONU, where the protection group information includes a relation between a primary link and a secondary link; and sending the message including the protection group information to the first OLT through a first interface of the first ONU.

Specifically, the first OLT obtains, by using the fifth message, a connection relation between the first ONU and the second OLT by using the second port, and obtains, by using self-configured protection group information or by receiving the protection group information sent by the second OLT, a primary-secondary relation between a link from the first OLT to the first ONU and a link from the second OLT to the first ONU; and the second OLT obtains, by using the third message, a connection relation between the first ONU and the first OLT by using the first port, and obtains, through a self-configured protection group information or by receiving the protection group information sent by the first OLT, a primary-secondary relation between the link from the second OLT to the first ONU and the link from the first OLT to the first ONU.

After the above preset steps, both the first OLT and the second OLT obtain respective connection relations of each other by using the first ONU. When the first OLT detects that the link from the first ONU to the first OLT (that is, the link in an uplink direction) fails, the first OLT sends the first message to the first ONU, to instruct the first ONU to switch to the second port from the first port.

For a Gigabit-capable passive optical network (Gigabit-Capable Passive Optical Network, GPON), any message of the above-mentioned first message to fifth message can be implemented by using an optical network terminal management and control interface (Optical Network Terminal Management and Control Interface, OMCI) message, and for an Ethernet passive optical network (Ethernet Passive Optical Network, EPON), an operation, administration and maintenance (operation, administration and maintenance, OAM) message may be used. However, it is not limited to the above two types of message formats. Any message that can be used for managing and configuring the optical network system is available.

Step 102: The first ONU switches to the second port from the first port according to the first message, and performs data communication with the second OLT through the second port.

The method further includes:
returning, by the first ONU, a notification message to the first OLT, to notify the first OLT that the first ONU has already switched to the second port to perform data communication with the second OLT.

In addition, when the link from the first OLT to the first ONU (that is, the link in a downlink direction) fails, and the first ONU detects that the link in the downlink direction fails, the first ONU directly switches to the second port from the first port to perform data communication with the second OLT through the second port.

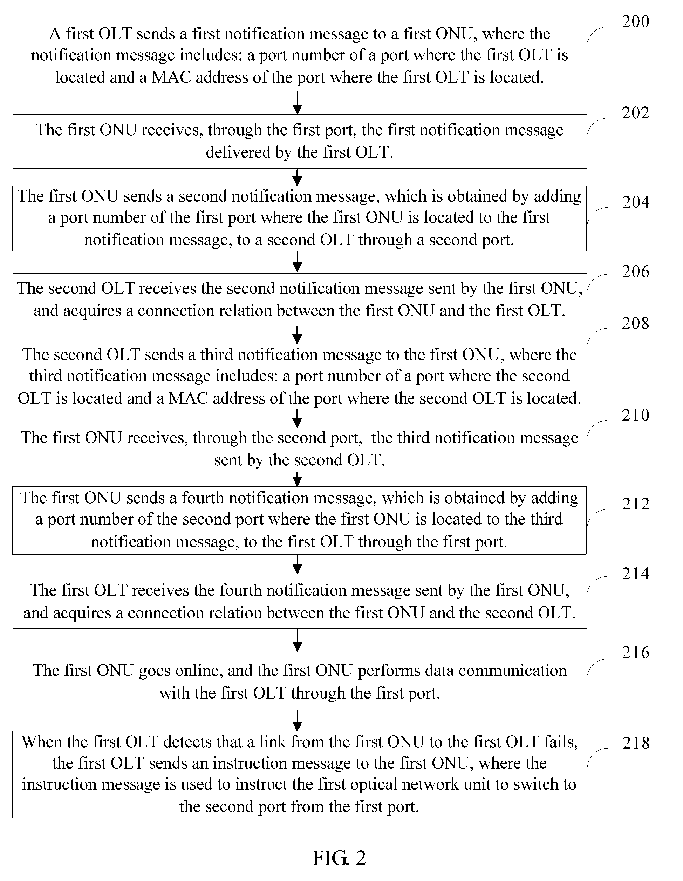

FIG. 2 is a specific method flowchart of a data communication method in an optical network system according to an embodiment of the present invention.

At least one first ONU in the optical network system is respectively connected to a first OLT by using a first port, and is connected to a second OLT by using a second port, and the data communication method specifically includes:

Step 200: The first OLT sends a first notification message to the first ONU, where the notification message includes: a port number of a port where the first OLT is located and a MAC address of the port where the first OLT is located.

Further, the notification message may further include: an IP address of a management interface where the first OLT is located, for example, an IP address of a Simple Network Management Protocol (Simple Network Management Protocol, SNMP).

Step 202: The first ONU receives, through the first port, the first notification message delivered by the first OLT.

Further, the first ONU stores the first notification message.

Step 204: The first ONU sends a second notification message, which is obtained by adding a port number of the first port where the first ONU is located to the first notification message, to the second OLT through the second port.

Further, the second notification message may further include: a MAC address of the first port where the first ONU is located, and/or an IP address of a management interface where the first ONU is located (for example, an IP address of an SNMP where the first ONU is located).

The second notification message includes the MAC address of the first port where the first ONU is located, so that in a case where the first ONU does not obtain the IP address of the management interface, a network management system may identify the first ONU by authenticating the MAC, and in a case where the first ONU has double MACs, the network management system may identify the two MACs under the first ONU by means of authentication.

Step 206: The second OLT receives the second notification message sent by the first ONU, and obtains a connection relation between the first ONU and the first OLT.

Step 208: The second OLT sends a third notification message to the first ONU, where the third notification message includes: a port number of a port where the second OLT is located and a MAC address of the port where the second OLT is located.

Further, the third notification message may further include an IP address of a management interface where the second OLT is located (for example, an IP address of an SNMP where the second OLT is located).

Step 210: The first ONU receives, through the second port, the third notification message sent by the second OLT.

Further, the first ONU stores the third notification message.

Step 212: The first ONU sends a fourth notification message, which is obtained by adding a port number of the second port where the first ONU is located to the third notification message, to the first OLT through the first port.

Further, the fourth notification message may further include: a MAC address of the second port where the first ONU is located, and/or the IP address of the management interface where the first ONU is located (for example, the IP address of the SNMP where the first ONU is located).

Step 214: The first OLT receives the fourth notification message sent by the first ONU, and obtains a connection relation between the first ONU and the second OLT.

For a better understanding of the above method, the following uses an example to describe a process that the first OLT and the second OLT obtain the connection relations of each other by using the first ONU.
(1) If the port number of the first OLT is: 0/1/0, the MAC address where the port of the first OLT is located is: 0000-0000-0001, and the IP address of the management interface of the first OLT is: 1.1.1.1;
(2) the port number of the first port of the first ONU is: 0, the port number of the second port of the first ONU is: 1, the MAC address of the first port of the first ONU is: 0000-0000-0002, the MAC address of the second port of the first ONU is: 0000-0000-0004, and the IP address of the management interface of the first ONU is: 2.2.2.2; and
(3) the port number of the second OLT is: 0/1/1, the MAC address of the second port of the second OLT is: 0000-0000-0003, and the IP address of the management interface of the second OLT is: 1.1.1.2.

In step 300, according to the above settings, the first OLT sends the first notification message including information of "(0/1/0) + (0000-0000-0001)" to the first ONU, where the first notification message may further include the IP address of the management interface where the first OLT is located: 1.1.1.1, that is, the first OLT may further send information including "(0/1/0) + (0000-0000-0001) + (1.1.1.1)" to the first ONU.

In step 304, the first ONU sends the second notification message including information of "(0/1/0) + (0000-0000-0001) + (0)" to the second OLT through the second port, so that the second OLT obtains the connection relation between the first ONU and the first OLT by using the first port.

The second notification message may further include information of "0000-0000-0002" and/or "2.2.2.2".

In step 208, the second OLT sends the third notification message including information of "(0/1/1) + (0000-0000-0003)" to the first ONU, where the third notification message may further include the IP address of the management interface where the second OLT is located: 1.1.1.2.

In step 214, the first ONU sends the fourth notification message including information of "(0/1/1) + (0000-0000-0003) + (1)" to the first OLT through the first port, so that the first OLT obtains the connection relation between the first ONU and the second OLT by using the second port. The fourth notification message may further include: information of "0000-0000-0004" and/or "2.2.2.2".

If the notification message includes the MAC address of the first port where the first ONU is located or the MAC address of the second port, in a case where the first ONU does not obtain the IP address of the management interface, a network management system may identify the first ONU by authenticating the MAC, and in a case where the first ONU has double MACs, the network management system may identify the two MACs under the first ONU by means of authentication.

By using the above steps, the first OLT and the second OLT obtain the connection relations between each other and the ONU. Further, in the above steps, the ONU is in an offline state. For a GPON, the first notification message to fourth notification message may be implemented by using an OMCI message, and for an EPON, an OAM message is used, however, it is not only limited to the above two types of messages. Any message that can be used for managing and configuring the optical network system is available.

The data communication method may further include a creation process of a protection group between the first OLT and the second OLT. The creation process and the above method that the first OLT and the second OLT obtain the connection relations of each other are not executed in sequence. The creation process may be executed before or simultaneously with the above method.

The creation process of the protection group between the first OLT and the second OLT is as follows:
receiving, by the first OLT a message, which is sent by the first OLT and carries protection group information, through a first interface of the first ONU, where the protection group information includes a relation between a primary link and a secondary link; and
sending the message including the protection group information to the second OLT through a second interface of the first ONU; or
receiving, by the first ONU a message, which is sent by the second OLT and carries protection group information, through a second interface of the first ONU, where the protection group information includes a relation between a primary link and a secondary link; and
sending the message including the protection group information to the first OLT through a first interface of the first ONU.

Further, the protection group information may further include: actions of creation and deletion of the protection group, parameters of the protection group, a primary-secondary role relation, and the like. The relation between the primary link and the secondary link may be obtained by comparing the MAC addresses of the ports where the first OLT and the second OLT are located or the IP addresses of the management interfaces where the first OLT and the second OLT are located. The OLT with the smaller address is selected to be a default primary role, and is set to be a default primary link; and the OLT with the larger address is selected to be a default secondary role, and is set to be a default secondary link.

In the above process of creating the protection group, the protection group may be automatically or manually created on the first OLT or the first OLT, and may also be sent to the first OLT or the second OLT after being created on a network management system, and then sent to the other party by using the first ONU.

Before the switching, by the first ONU, to the second port from the first port, the method may further include synchronization of configuration information between the first OLT and the second OLT.

The process of synchronization of configuration information is as follows:

If the first OLT is set to be a primary OLT, the configuration information of the OLT for the first ONU is delivered to the first ONU by using a message, where the configuration information includes information of a TCONT value, an ONU ID and a service flow identifier, allocated by the OLT for the ONU, and the like; and for the GPON, the information may further include a GPON encapsulation mode GEM port number, and the like. The above configuration information is the same with the configuration information which is allocated by the first OLT to the first ONU in the prior art in content, and details are not described herein again. A difference from the prior art is that, after receiving the configuration information through the first port, the first ONU forwards the configuration information to the second OLT through the second port, so that the first OLT and the second OLT synchronize the configuration information of the first ONU.

After the above pre-created protection group and configuration synchronization, the data communication method in the optical network system further includes:

S216: The first ONU goes online, and the first ONU performs data communication with the first OLT through the first port.

S218: When the first OLT detects that a link from the first ONU to the first OLT fails, the first OLT sends an instruction message to the first ONU, where the instruction message is used to instruct the first optical network unit to switch to the second port from the first port.

Further, the instruction message further includes link alarm information.

S220: The first ONU receives the instruction message through the first port, switches to the second port from the first port according to the instruction message, and performs data communication with the second OLT through the second port.

The above step S218 is only one case, where the first OLT sends the instruction message to the first ONU after detecting a link failure, and the first OLT may also directly send the instruction message to the first ONU, so that the first ONU switches to the second port from the first port. In this case, the instruction message does not need to carry the alarm information.

Any message described above may be implemented by an OMCI message or an OAM message.

In addition, when the first OLT detects that a link from the first ONU to the first OLT (that is, an uplink link) fails, the first OLT sends a first instruction message to the first ONU, so that the first ONU switches to the second port from the first port, and performs communication with the second OLT through the second port. When the first ONU detects that a link from the first OLT to the first ONU (that is, a downlink link) fails, the first ONU may directly switch to the second port from the first port, perform data communication with the second OLT through the second port, and notify a network management system of the above switchover case.

In the embodiment of the present invention, the first message sent by the first optical line terminal is received through the first port of the first optical network unit, where the first message is used to instruct the first optical network unit to switch to the second port from the first port; and the first optical network unit switches to the second port from the first port according to the first message, and performs data communication with the second optical line terminal through the second port. Since a data transmission speed between the first optical line terminal and the first optical network unit is higher than a data transmission speed between an OLT and an EMS, by using the data communication method, the data transmission speed is raised, it is ensured that switchover time between the OLTs is within 50 ms, and reliability of data communication is further improved.

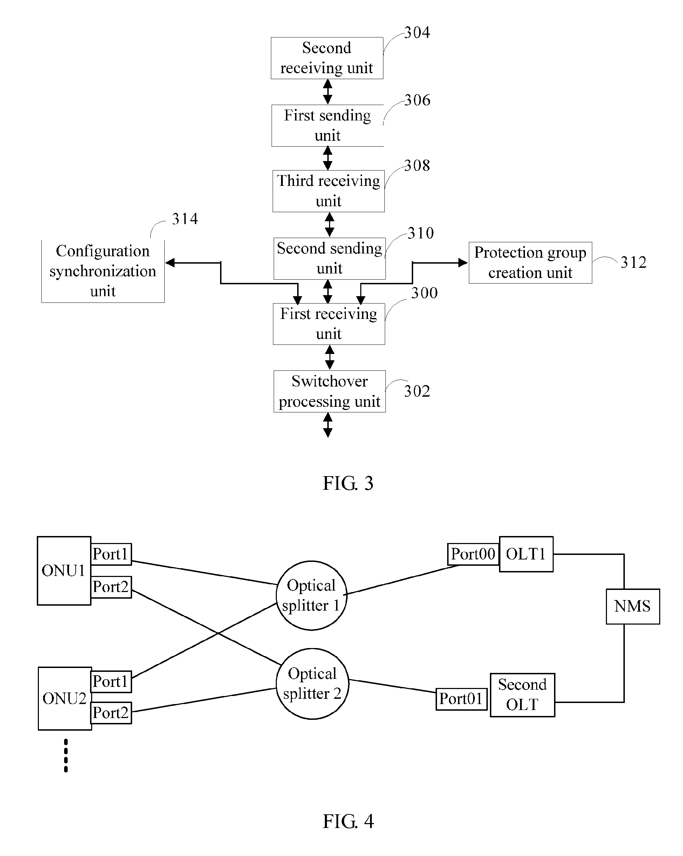

As shown in FIG. 3, FIG. 3 is an optical network unit according to an embodiment of the present invention, where:
the optical network unit is respectively connected to a first optical line terminal by using a first port, and is connected to a second optical line terminal by using a second port, and the optical network unit specifically includes:
   a first receiving unit 300, configured to receive, through the first port of the optical network unit, a first message sent by the first optical line terminal, where the first message is used to instruct the optical network unit to switch to the second port from the first port; and
   a switchover processing unit 302, configured to switch the optical network unit to the second port from the first port according to the first message, and perform data communication with the second optical line terminal through the second port.

The optical network unit further includes:
a second receiving unit 304, configured to receive, through the first port of the optical network unit, a second message sent by the first optical line terminal, where the second message includes: a port number of a port where the first optical line terminal is located and a media access control MAC address of the port where the first optical line terminal is located; and
a first sending unit 306, configured to send, according to the second message, a third message to the second optical line terminal through the second port of the optical network unit, where the third message includes information included in the second message, and a port number of the first port where the optical network unit is located.

The optical network unit further includes:
a third receiving unit 308, configured to receive, through the second port of the optical network unit, a fourth message returned by the second optical line terminal, where the fourth message includes: a port number of a port where the second optical line terminal is located and a MAC address of the port where the second optical line terminal is located; and
a second sending unit 310, configured to send, according to the fourth message, a fifth message to the first optical line terminal through the first port of the optical network unit, where the fifth message includes information included in the fourth message and a port number of the second port where the optical network unit is located.

The second message further includes an Internet Protocol IP address of a management interface where the first optical line terminal is located; the third message further includes a MAC address of the first port where the optical network unit is located, and/or an IP address of a management interface where the optical network unit is located; the fourth message further includes an IP address of a management interface where the second optical line terminal is located; and the fifth message further includes a MAC address of the second port where the optical network unit is located, and/or the IP address of the management interface where the optical network unit is located.

The optical network unit further includes:
a protection group creation unit 312, configured to receive a message, which is sent by the first optical line terminal and carries protection group information, through a first interface of the optical network unit, where the protection group information includes a relation between a primary link and a secondary link; and send the message including the protection group information to the second optical line terminal through a second interface of the optical network unit; or
configured to receive a message, which is sent by the second optical line terminal and carries protection group information, through a second interface of the optical network unit, where the protection group information includes a relation between a primary link and a secondary link; and send the message including the protection group information to the first optical line terminal through a first interface of the optical network unit.

The optical network unit further includes:
a configuration synchronization unit 314, configured to receive configuration information, sent by the first optical line terminal, of the first optical network unit through the first port of the first optical network unit, and forward the configuration information of the first optical network unit to the second optical line terminal through the second port of the first optical network unit.

Any message described above may be implemented by an OMCI message or an OAM message.

In addition, when the first OLT detects that a link from the first ONU to the first OLT (that is, an uplink link) fails, the first OLT sends a first instruction message to the first ONU, so that the first ONU switches to the second port from the first port, and performs communication with the second OLT through the second port. When the first ONU detects that a link from the first OLT to the first ONU (that is, a downlink link) fails, the first ONU may directly switch to the second port from the first port, perform data communication with the second OLT through the second port, and notify a network management system of the above switchover case.

An optical network unit provided by the embodiment of the present invention receives, through the first port of the first optical network unit, the first message sent by the first optical line terminal, where the first message is used to instruct the first optical network unit to switch to the second port from the first port; and the first optical network unit switches to the second port from the first port according to the first message, and performs data communication with the second optical line terminal through the second port. Since a data transmission speed between the first optical line terminal and the first optical network unit is higher than a data transmission speed between an OLT and an EMS, by using the data communication method, the data transmission speed is raised, it is ensured that switchover time between the OLTs is within 50 ms, and reliability of data communication is further improved.

As shown in FIG. 4, FIG. 4 is a schematic structural diagram of an optical network system according to an embodiment of the present invention.

In FIG. 4, a first OLT 1 is connected to an optical splitter 1 by using a port 00 where the first OLT 1 is located, and the optical splitter 1 is connected to the first ONU 1 by using a first port 1 where the first ONU 1 is located; and the second OLT 2 is connected to an optical splitter 2 by using a port 01 where the second OLT 2 is located, and the optical splitter 2 is connected to the first ONU 1 by using a second port 2 where the first ONU 1 is located. The second ONU 2 is connected to the optical splitter 1 by using a first port 1 where the second ONU 2 is located, and the optical splitter 1 is connected to the first OLT 1; and the second ONU 2 is connected to the optical splitter 2 by using the second port 2 where the second ONU 2 is located, and the optical splitter 2 is connected to the second OLT 2. Both the first OLT 1 and the second OLT 2 are connected to a network management system (Network Management System, NMS for short).

The first OLT 1 is configured to send a first message to the first ONU 1, where the first message is used to instruct the ONU 1 to switch to the second port 2 from the first port 1.

The first ONU 1 is configured to receive, through the first port 1 of the ONU 1, the first message sent by the OLT 1; and the ONU 1 switches to the second port 2 from the first port 1 according to the first message, and performs data communication with the OLT 2 through the second port.

The second OLT 2 is configured to: after the ONU 1 switches to the second port 2 from the first port 1, perform data communication with the ONU 1 through the second port 2 of the ONU 1.

The ONU 1 is specifically configured to: when the OLT 1 detects that a link from the ONU 1 to the OLT 1 fails, send the first message to the ONU 1, where the first message is used to instruct the ONU 1 to switch to the second port 2 from the first port 1, or the OLT 1 may directly send the first message to the ONU 1, to instruct the ONU 1 to switch to the second port from the first port, and to perform data communication with the second OLT through the second port.

Further, the OLT 1 is further configured to send a second message to the ONU 1, where the second message includes: a port number 00 of the port where the OLT 1 is located and a MAC address of the port where the OLT 1 is located; and receive a fifth message sent by the ONU 1.

The ONU 1 is further configured to receive, through the second port 2 of the ONU 1, the second message sent by the OLT 1; and send, according to the second message, a third message to the OLT 2 through the second port 2 of the ONU 1, where the third message includes: a port number 1 of the port where the ONU 1 is located, a MAC address of the port where the OLT 1 is located, and a port number 1 of the first port where the ONU 1 is located; and the ONU 1 is further configured to receive, through the second port 2 of the ONU 1, a fourth message sent by the OLT 2, and send, according to the fourth message, a fifth message to the OLT 1 through the first port 1 of the ONU 1, where the fifth message includes a port number 01 of the port where the OLT 2 is located, a MAC address of the port where the OLT 2 is located, and a port number 2 of the second port where the ONU 1 is located.

The OLT 2 is further configured to receive the third message sent by the ONU 1; and send the fourth message to the ONU 1, where the fourth message includes: the port number 01 of the port where the OLT 2 is located and the MAC address of the port where the OLT 2 is located.

Further, the second message further includes an IP address of a management interface where the OLT 1 is located; the third message further includes a MAC address of the first port 1 where the ONU 1 is located, and/or an IP address of a management interface where the ONU 1 is located; the fourth message further includes an IP address of a management interface where the OLT 2 is located; and the fifth message further includes a MAC address of the second port 2 where the ONU 1 is located, and/or the IP address of the management interface where the ONU 1 is located.

In addition, when the first OLT detects that a link from the first ONU to the first OLT (that is, an uplink link) fails, the first OLT sends a first instruction message to the first ONU, so that the first ONU switches to the second port from the first port, and performs communication with the second OLT through the second port. When the first ONU detects that a link from the first OLT to the first ONU (that is, a downlink link) fails, the first ONU may directly switch to the second port from the first port, perform data communication with the second OLT through the second port, and notify a network management system of the above switchover case.

An optical network system provided by the embodiment of the present invention receives, through the first port of the first optical network unit, the first message sent by the first optical line terminal, where the first message is used to instruct the first optical network unit to switch to the second port from the first port; and the first optical network unit switches to the second port from the first port according to the first message, and performs data communication with the second optical line terminal through the second port. Since a data transmission speed between the first optical line terminal and the first optical network unit is higher than a data transmission speed between an OLT and an EMS, by using the data communication method, the data transmission speed is raised, it is ensured that switchover time between the OLTs is within 50 ms, and reliability of data communication is further improved.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, as long as such modifications or replacements do not cause the essence of corresponding technical solutions to depart from the spirit and scope of the technical solutions of the embodiments of the present invention.

## Claims

1. A data communication method in an optical network system, wherein at least one first optical network unit in the optical network system is respectively connected to a first optical line terminal by using a first port, and is connected to a second optical line terminal by using a second port, and the data communication method comprises:
receiving, through the first port of the first optical network unit, a first message sent by the first optical line terminal, wherein the first message is used to instruct the first optical network unit to switch to the second port from the first port; and
switching, by the first optical network unit, to the second port from the first port according to the first message, and performing data communication with the second optical line terminal through the second port.

2. The data communication method according to claim 1, wherein before the receiving, through the first port of the first optical network unit, a first message sent by the first optical line terminal, the method further comprises:
receiving, through the first port of the first optical network unit, a second message sent by the first optical line terminal, wherein the second message comprises: a port number of a port where the first optical line terminal is located and a media access control, MAC, address of the port where the first optical line terminal is located; and
sending, according to the second message, a third message to the second optical line terminal through the second port of the first optical network unit, wherein the third message comprises information comprised in the second message and a port number of the first port where the first optical network unit is located.

3. The data communication method according to claim 2, wherein the method further comprises:
receiving, through the second port of the first optical network unit, a fourth message returned by the second optical line terminal, wherein the fourth message comprises: a port number of a port where the second optical line terminal is located and a MAC address of the port where the second optical line terminal is located; and
sending, according to the fourth message, a fifth message to the first optical line terminal through the first port of the first optical network unit, wherein the fifth message comprises information comprised in the fourth message and a port number of the second port where the first optical network unit is located.

4. The data communication method according to claim 2 or 3, wherein the second message further comprises an Internet Protocol IP address of a management interface where the first optical line terminal is located; the third message further comprises a MAC address of the first port where the first optical network unit is located, and/or an IP address of a management interface where the first optical network unit is located; the fourth message further comprises an Internet Protocol, IP, address of a management interface where the second optical line terminal is located; and the fifth message further comprises a MAC address of the second port where the first optical network unit is located, and/or the IP address of the management interface where the first optical network unit is located.

5. The data communication method according to claim 1, wherein before the receiving, through the first port of the first optical network unit, a first message sent by the first optical line terminal, the method further comprises:
receiving a message, which is sent by the first optical line terminal and carries protection group information, through a first interface of the first optical network unit, wherein the protection group information comprises a relation between a primary link and a secondary link; and
sending the message comprising the protection group information to the second optical line terminal through a second interface of the first optical network unit; or
receiving a message, which is sent by the second optical line terminal and carries protection group information, through a second interface of the first optical network unit, wherein the protection group information comprises a relation between a primary link and a secondary link; and
sending the message comprising the protection group information to the first optical line terminal through a first interface of the first optical network unit.

6. The data communication method according to claim 5, wherein the method further comprises:
receiving configuration information, sent by the first optical line terminal, of the first optical network unit through the first port of the first optical network unit, and forwarding the configuration information of the first optical network unit to the second optical line terminal through the second port of the first optical network unit.

7. An optical network unit, wherein the optical network unit is respectively connected to a first optical line terminal by using a first port, and is connected to a second optical line terminal by using a second port, and the optical network unit comprises:
a first receiving unit, configured to receive, through the first port of the optical network unit, a first message sent by the first optical line terminal, wherein the first message is used to instruct the optical network unit to switch to the second port from the first port; and
a switchover processing unit, configured to switch the optical network unit to the second port from the first port according to the first message, and perform data communication with the second optical line terminal through the second port.

8. The optical network unit according to claim 7, wherein the optical network unit further comprises:
a second receiving unit, configured to receive, through the first port of the optical network unit, a second message sent by the first optical line terminal, wherein the second message comprises: a port number of a port where the first optical line terminal is located and a media access control, MAC, address of the port where the first optical line terminal is located; and
a first sending unit, configured to send, according to the second message, a third message to the second optical line terminal through the second port of the optical network unit, wherein the third message comprises information comprised in the second message and a port number of the first port where the optical network unit is located.

9. The optical network unit according to claim 7, wherein the optical network unit further comprises:
a third receiving unit, configured to receive, through the second port of the optical network unit, a fourth message returned by the second optical line terminal, wherein the fourth message comprises: a port number of a port where the second optical line terminal is located and a MAC address of the port where the second optical line terminal is located; and
a second sending unit, configured to send, according to the fourth message, a fifth message to the first optical line terminal through the first port of the optical network unit, wherein the fifth message comprises information comprised in the fourth message and a port number of the second port where the optical network unit is located.

10. The optical network unit according to claim 8 or 9, wherein the second message further comprises an Internet Protocol, IP, address of a management interface where the first optical line terminal is located; the third message further comprises a MAC address of the first port where the optical network unit is located, and/or an IP address of a management interface where the optical network unit is located; the fourth message further comprises an IP address of a management interface where the second optical line terminal is located; and the fifth message further comprises a MAC address of the second port where the optical network unit is located, and/or the IP address of the management interface where the optical network unit is located.

11. The optical network unit according to claim 7, wherein the optical network unit further comprises:
a protection group creation unit, configured to receive a message, which is sent by the first optical line terminal and carries protection group information, through a first interface of the optical network unit, wherein the protection group information comprises a relation between a primary link and a secondary link; and send the message comprising the protection group information to the second optical line terminal through a second interface of the optical network unit; or
configured to receive a message, which is sent by the second optical line terminal and carries protection group information, through a second interface of the optical network unit, wherein the protection group information comprises a relation between a primary link and a secondary link; and send the message comprising the protection group information to the first optical line terminal through a first interface of the optical network unit.

12. The optical network unit according to claim 7, wherein the optical network unit further comprises:
a configuration synchronization unit, configured to receive configuration information, sent by the first optical line terminal, of the first optical network unit through the first port of the first optical network unit, and forward the configuration information of the first optical network unit to the second optical line terminal through the second port of the first optical network unit.

13. An optical network system, wherein at least one first optical network unit in the optical network system is respectively connected to a first optical line terminal by using a first port, and is connected to a second optical line terminal by using a second port, and the optical network system comprises:
the first optical line terminal, configured to send a first message to the first optical network unit, wherein the first message is used to instruct the optical network unit to switch to the second port from the first port;
the first optical network unit, configured to receive, through the first port of the first optical network unit, the first message sent by the first optical line terminal; and switch to the second port from the first port according to the first message, and perform data communication with the second optical line terminal through the second port; and
the second optical line terminal, configured to: after the first optical network unit switches to the second port from the first port, perform data communication with the first optical network unit through the second port of the first optical network unit.

14. The optical network system according to claim 13, wherein the first optical line terminal is specifically configured to: when the first optical line terminal detects that a link from the first optical network unit to the first optical line terminal fails, send the first message to the first optical network unit, wherein the first message is used to instruct the first optical network unit to switch to the second port from the first port.

15. The optical network system according to claim 13 or 14, wherein
the first optical line terminal is further configured to send a second message to the first optical network unit, wherein the second message comprises: a port number of a port where the first optical line terminal is located and a media access control, MAC, address of the port where the first optical line terminal is located; and receive a fifth message sent by the optical network unit;
the optical network unit is further configured to receive, through the second port of the first optical network unit, the second message sent by the first optical line terminal; send, according to the second message, a third message to the second optical line terminal through the second port of the first optical network unit, wherein the third message comprises information comprised in the second message and a port number of the first port where the first optical network unit is located; and receive, through the second port of the first optical network unit, a fourth message sent by the second optical line terminal, and send, according to the fourth message, a fifth message to the first optical line terminal through the first port of the first optical network unit, wherein the fifth message comprises information comprised in the fourth message and a port number of the second port where the first optical network unit is located; and
the second optical line terminal is further configured to receive the third message sent by the first optical network unit; and send the fourth message to the optical network unit, wherein the fourth message comprises: a port number of a port where the second optical line terminal is located and a MAC address of the port where the second optical line terminal is located.
